(19) **Europäisches Patentamt**

**European Patent Office**

**Office européen des brevets**

(11) **EP 0 931 437 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(21) Anmeldenummer: **98944997.0**

(22) Anmeldetag: **16.07.1998**

(51) Int Cl.[7]: **H05B 41/24**, H05B 41/30

(86) Internationale Anmeldenummer:
**PCT/DE98/01992**

(87) Internationale Veröffentlichungsnummer:
**WO 99/08491 (18.02.1999 Gazette 1999/07)**

(54) **VERFAHREN ZUM ERZEUGEN VON IMPULSSPANNUNGSFOLGEN FÜR DEN BETRIEB VON DIELEKTRISCH BEHINDERTEN ENTLADUNGSLAMPEN UND ZUGEHÖRIGE SCHALTUNGSANORDNUNG**

METHOD AND DEVICE FOR PRODUCING SERIES OF IMPULSE VOLTAGES TO OPERATE DIELECTRIC BARRIER DISCHARGE LAMPS AND CIRCUIT PERTAINING THERETO

PROCEDE DE PRODUCTION DE SERIES D'IMPULSIONS DE TENSION POUR FAIRE FONCTIONNER DES LAMPES A DECHARGE A BARRIERE DIELECTRIQUE, ET CIRCUIT ASSOCIE

(84) Benannte Vertragsstaaten:
**AT BE CH DE FR GB IT LI NL SE**

(30) Priorität: **12.08.1997 DE 19734885**

(43) Veröffentlichungstag der Anmeldung:
**28.07.1999 Patentblatt 1999/30**

(73) Patentinhaber:
• **Patent-Treuhand-Gesellschaft für elektrische Glühlampen mbH**
**81543 München (DE)**
Benannte Vertragsstaaten:
**BE DE FR GB IT NL SE**
• **Vollkommer, Frank, Dr.**
**82131 Buchendorf (DE)**
Benannte Vertragsstaaten:
**CH LI AT**
• **Hitzschke, Lothar, Dr.**
**81737 München (DE)**
Benannte Vertragsstaaten:
**CH LI AT**

(72) Erfinder:
• **VOLLKOMMER, Frank**
**D-82131 Buchendorf (DE)**
• **HITZSCHKE, Lothar**
**D-81737 München (DE)**

(56) Entgegenhaltungen:
**WO-A-93/23975**          **WO-A-94/23442**

**Beschreibung**

**Technisches Gebiet**

Die Erfindung betrifft ein Verfahren zum Erzeugen von Impulsspannungsfolgen für den Betrieb von Entladungslampen mittels gepulster, dielektrisch behinderter Entladung gemäß dem Oberbegriff des Anspruchs 1. Außerdem betrifft die Erfindung eine elektrische Schaltungsanordnung zum Erzeugen von Impulsspannungsfolgen gemäß diesem Verfahren. Schließlich betrifft die Erfindung auch ein Beleuchtungssystem mit dieser Schaltungsanordnung.

Unter dem Begriff "Entladungslampe" sind auch solche Strahlungsquellen zu verstehen, die neben elektromagnetischer Strahlung im sichtbaren Spektralbereich, also Licht, auch oder sogar überwiegend Strahlung im UV- bzw. VUV-Bereich emittieren.

Die Impulsspannungsfolge kann prinzipiell sowohl unipolar als auch bipolar sein und dient zum Betreiben von Entladungslampen bzw. -strahlern, bei denen mindestens die Elektroden einer Polarität dielektrisch behindert sind, wie beispielsweise in der WO 94/23442 beschrieben. Diese Betriebsweise verwendet eine im Prinzip unbeschränkte Folge von Spannungsimpulsen, während denen vornehmlich elektrische Wirkleistung eingekoppelt wird und die durch Totzeiten voneinander getrennt sind. Entscheidend für die Effizienz der Nutzstrahlungserzeugung sind im wesentlichen die Impulsform, insbesondere steile Anstiege, sowie die Zeitdauern der Puls- bzw. Totzeiten. Die erforderlichen Spitzenwerte der Spannungspulse betragen - abhängig unter anderem von der Schlagweite, von der Art und dem Druck des Füllgases sowie von der Art und Dicke des Dielektrikums - typisch ein bis mehrere Kilovolt.

**Stand der Technik**

Diese hohen Spannungsspitzen im kV-Bereich lassen sich gegenwärtig nicht zuverlässig mit einem Schalttransistor schalten bzw. erzeugen. Üblicherweise ist dazu ein Impulstransformator erforderlich, der in den Ausgang der Impulsspannungsquelle geschaltet ist.

Aus der Schrift DE 195 48 003 A1 ist bereits eine derartige Schaltungsanordnung zur Erzeugung von Impulsspannungsfolgen mit genau einem Impulskreis bekannt. Dieser Impulskreis besteht im wesentlichen aus einem Kondensator, einem Transistor und einem Impulstransformator. Während der Leitendphase des Transistors wird die im Kondensator gespeicherte Energie zum Impulstransformator transferiert. Dabei transformiert der Impulstransformator die Impulsspannung auf die erforderlichen Spitzenwerte, womit allerdings einige Nachteile verbunden sind. Erstens muß der Impulstransformator auf den Spitzenwert der Impulsspannungsfolge ausgelegt sein und ist deshalb relativ groß und teuer. Außerdem ist die Impulsbelastung des Impulstransformators relativ groß und die ebenfalls relativ großen Wickelkapazitäten beeinträchtigen die Impulsform. Ein weiterer Nachteil ist, daß auf den Zuleitungen der Sekundärwicklung des Impulstransformators der volle Spitzenwert der Impulsspannungsfolge auftritt. Aufgrund von allgegenwärtigen Streukapazitäten zur Umgebung resultieren daraus relativ hohe Störsignale, sogenannte EMI (Electromagnetic Interference).

**Darstellung der Erfindung**

Es ist Aufgabe der vorliegenden Erfindung, die genannten Nachteile zu vermeiden und ein Verfahren gemäß dem Oberbegriff des Anspruchs 1 bereitzustellen, welches geringere EMI erzeugt.

Diese Aufgabe wird durch die kennzeichnenden Merkmale des Anspruchs 1 gelöst. Besonders vorteilhafte Ausgestaltungen finden sich in den davon abhängigen Ansprüchen

Eine weitere Aufgabe der vorliegenden Erfindung ist es, eine Schaltungsanordnung zur Durchführung dieses Verfahrens bereitzustellen. Diese Aufgabe wird durch die Merkmale des auf die Schaltungsanordnung gerichteten unabhängigen Anspruchs gelöst. Weitere besonders vorteilhafte Merkmale finden sich in den davon abhängigen Ansprüchen.

Der Grundgedanke der Erfindung besteht darin, die Impulsspannungsfolge aus zwei Teilspannungsfolgen zusammenzusetzen derart, daß die Spitzenwerte jeder Teilspannungsfolge kleiner sind als die Spitzenwerte der resultierenden Impulsspannungsfolge, beispielsweise nur halb so groß. Dies hat den Vorteil, daß bei der Erzeugung der Teilspannungsfolgen entsprechend geringere EMI entstehen. Außerdem enthält die eine der beiden Teilspannungsfolgen bezüglich eines Bezugspotentials positive Anstiegsflanken und die andere Teilspannungsfolge enthält bezüglich dieses Bezugspotentials negative Anstiegsflanken. Vorzugsweise ist die eine der beiden Teilspannungsfolgen die bezüglich des Bezugspotentials Invertierte der anderen Teilspannungsfolge. Idealerweise kompensieren sich die von den beiden Teilspannungsfolgen erzeugte EMI zumindest lokal vollständig. Die für die dielektrisch behinderte Entladung erforderlichen höheren Spitzenwerte und folglich die stärkere EMI entsteht erst dort, wo hohe Spitzenspannungen tatsächlich benötigt werden, nämlich an der Last, d.h. zwischen den Elektroden der Strahlungsquelle selbst. Aus WO 93/23975 ist eine Schaltungsanordnung zum Unterdrücken von EMI bei elektrodenlosen Entladungslampen bekannt mit einer symmetrischen Filteranordnung die aus zwei einzelnen Filtern besteht. Beide Einzelfilter haben ein gemeisames Bezugspotential und die Ausgangssignale der beiden Filter sind von gleicher Höhe und entgegengesetzter Phase.

Erfindungsgemäß wird dieser Grundgedanke in folgendem Verfahren umgesetzt. Es werden zwei Teilfolgen von jeweils durch Pausen voneinander getrennten Spannungspulsen - im folgenden verkürzend auch als Teilspannungsfolgen bezeichnet - erzeugt, wobei die beiden Teilfolgen bezüglich eines gemeinsamen Bezugspotentials, z.B. Erde, Anstiegsflanken mit zueinander entgegengesetzten Steigungen aufweisen. Die beiden Teilfolgen werden überlagert derart, daß eine Differenzenfolge entsteht. Gegebenenfalls werden die beiden Teilfolgen derart miteinander synchronisiert, daß die Spitzenwerte der Differenzenfolge größer sind als die Spitzenwerte jeder der beiden einzelnen Teilfolgen von Spannungspulsen.

Die einzelnen Impulse der Teilfolgen können sowohl unipolar sein als auch bipolar. Der Begriff "bipolarer Impuls" bedeutet, daß innerhalb eines solchen Impulses die zeitabhängige Spannung ein- oder auch mehrmals das Vorzeichen wechselt. Damit resultieren gemäß dem oben genannten Verfahren schließlich unipolare bzw. bipolare Differenzenfolgen. Entscheidend ist dabei nur, daß die korrespondierenden Impulse der beiden Teilfolgen bezüglich des gemeinsamen Bezugspotentials Anstiegsflanken mit zueinander entgegengesetzten Steigungen aufweisen. Im bipolaren Fall übernehmen die Elektroden je nach Phase des Impulses sowohl die Rolle der Anode als auch der Kathode.

Bei der Festlegung der maßgebenden Steigung der Anstiegsflanken der jeweiligen Impulse sollen Signalverzerrungen unberücksichtigt bleiben, die in der Praxis häufig vorkommen und zum Teil sogar unvermeidbar sind, wie beispielsweise Über- oder Unterschwinger, Rauschkomponenten und dergleichen, die aber allenfalls unwesentlich (< 50%) zur Wirkleistungseinkopplung in die Lampe beitragen. Maßgebend für diese Betrachtung sind vielmehr jene Zeitbereiche der Impulse, während denen die wesentlichen Wirkleistungseinkopplungen (> 50%) stattfinden.

In einer bevorzugten Variante für die Erzeugung einer Differenzenfolge wird die eine Teilfolge von Spannungspulsen durch Invertierung der anderen Teilfolge von Spannungspulsen gebildet. Die Synchronisierung erfolgt derart, daß die Spitzenwerte der Differenzenfolge die Summe der Spitzenwerte der Teilfolgen sind.

In einer weiteren Variante wird als zusätzlicher Verfahrensschritt mindestens einer der beiden Teilfolgen von Spannungspulsen und/oder der Differenzenfolge eine Offset-Gleichspannung additiv überlagert, wobei die Gesamt-Offset-Gleichspannung so gewählt wird, daß die Entladung(en) nach jedem Spannungspuls verlöschen können und ein unerwünschtes Wiederzünden zwischen den einzelnen Spannungspulsen verhindert wird. Auf diese Weise läßt sich nämlich ein relevanter Spannungsanteil durch die Gleichspannung bereitstellen. Dies hat den Vorteil, daß die Impulskreise nur auf den restlichen Spannungsanteil ausgelegt werden müssen.

Die erfindungsgemäße Schaltungsanordnung zum Erzeugen von Impulsspannungsfolgen gemäß des vorstehend beschriebenen Verfahrens umfaßt zwei seriell geschaltete Impulskreise mit je zwei Ausgangspolen und je einem Steuereingang sowie einen Zeitgeberkreis, der mit den Steuereingängen der beiden Impulskreise verbunden ist. Einer der beiden Ausgangspole des ersten Impulskreises ist mit dem Ausgangspol entgegengesetzter Polarität des zweiten Impulskreises verbunden. Die Verbindung der beiden genannten Ausgangspole legt das Bezugspotential gegenüber den zwei freien Ausgangspolen der beiden Impulskreise fest. Auf diese Weise liegt zwischen den beiden freien Ausgangspolen das Differenzsignal der beiden jeweils zwischen einem freien Ausgangspol und dem Bezugspotential liegenden Signale. Das Bezugspotential kann, muß aber nicht notwendigerweise mit der Schaltungsmasse oder mit Erdpotential verbunden sein.

Die beiden Impulskreise sind beispielsweise jeweils gemäß der in der DE 195 48 003 A1 offenbarten Schaltung aufgebaut. Der Vorteil gegenüber dem Stand der Technik ist hierbei, daß die für eine vorgebbare Spitzenspannung erforderlichen Übersetzungs- und folglich Wickelverhältnisse der beiden Transformatoren kleiner, bei symmetrischer Auslegung beispielsweise jeweils nur halb so groß sind. Daraus resultiert als weiterer Vorteil, daß steilere Flanken der Spannungsimpulse und folglich eine höhere Effizienz der Nutzstrahlungserzeugung erzielt werden können.

Außerdem kann in vielen Fällen, in denen bisher ein Einsatz eines Transformators unumgänglich war, völlig auf den Einsatz von Transformatoren verzichtet werden, da erfindungsgemäß die doppelte pro Impulskreis realisierbare Spitzenspannung erzielt wird.

Die konkrete Ausführung der Impulskreise wird sich im Einzelfall nach den erforderlichen Spitzenwerten an den Elektroden ausrichten. Maßgebend für die vorteilhafte Wirkung der Schaltung ist in erster Linie, daß die beiden Impulskreise geeignet sind, je eine Teilfolge von durch Pausen voneinander getrennten Spannungspulsen zu liefern, wobei die Teilspannungsfolgen jeweils Anstiegsflanken mit zueinander entgegengesetzten Steigungen enthalten.

Der Zeitgeberkreis steuert die beiden Impulskreise derart an, daß die beiden Teilspannungsfolgen miteinander synchronisiert sind.

In einer Variante ist mindestens einer der beiden freien Anschlußpole der Impulskreise mit dem Pol der jeweils entgegengesetzten Polarität einer Offset-Gleichspannungsquelle verbunden. Auf diese Weise wird die in einer Variante des Verfahrens erläuterte Offset-Gleichspannung realisiert.

Außerdem wird in Anspruch 10 Schutz für ein Beleuchtungssystems beansprucht, welches aus der erfindungsgemäßen Schaltungsanordnung gemäß einem oder mehreren der Ansprüche 5 bis 9 und einer mittels gepulster, dielektrisch behinderter Entladung betriebenen Strahlungsquelle besteht.

## Beschreibung der Zeichnungen

Im folgenden soll die Erfindung anhand eines Ausführungsbeispiels näher erläutert werden. Es zeigen:

Figur 1      eine erfindungsgemäße Schaltungsanordnung mit einem Flachstrahler,

Figur 2a      einen zeitlichen Ausschnitt der Teilspannungsfolge $U_1(t)$ aus Figur 1 mit unipolaren Impulsen,

Figur 2b      einen zeitlichen Ausschnitt der Teilspannungsfolge $U_2(t)$ aus Figur 1 mit unipolaren Impulsen,

Figur 2c      einen zeitlichen Ausschnitt der Differenzspannungsfolge $U_3(t)$ aus Figur 1,

Figur 3a      einen zeitlichen Ausschnitt einer weiteren Teilspannungsfolge $U'_1(t)$,

Figur 3b      einen zeitlichen Ausschnitt einer weiteren Teilspannungsfolge $U'_2(t)$,

Figur 3c      einen zeitlichen Ausschnitt der Differenzspannungsfolge $U'3(t)$,

Figur 4a      einen zeitlichen Ausschnitt einer Teilspannungsfolge mit bipolaren Impulsen $U''_1(t)$,

Figur 4b      einen zeitlichen Ausschnitt einer Teilspannungsfolge mit bipolaren Impulsen $U''_2(t)$,

Figur 4c      einen zeitlichen Ausschnitt der Differenzspannungsfolge $U''_3(t)$.

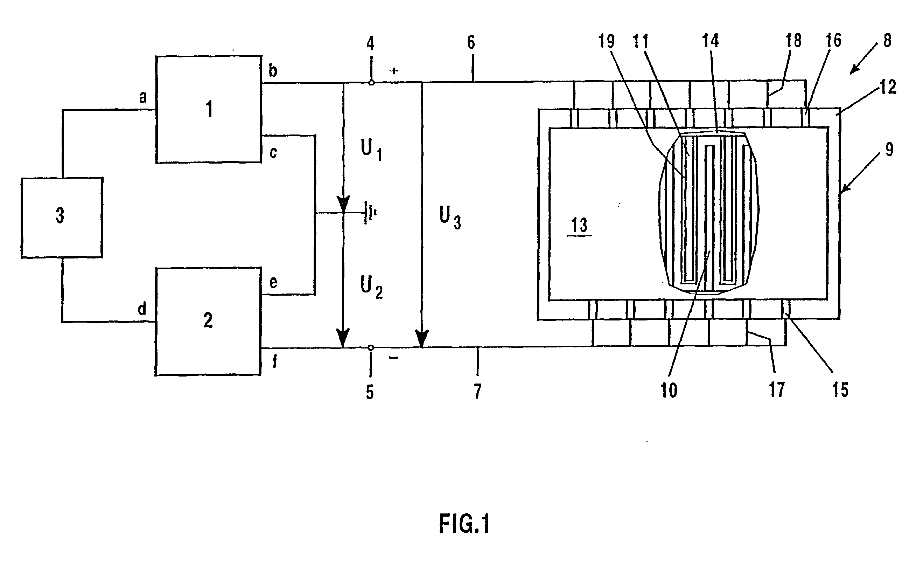

Die Figur 1 zeigt in schematischer Darstellung das Blockschaltbild der erfindungsgemäßen Schaltungsanordnung zum Erzeugen von Impulsspannungsfolgen und einen Flachstrahler. Die Schaltungsanordnung besteht im wesentlichen aus einem ersten und einem zweiten Impulskreis 1, 2 sowie einem Zeitgeber 3. Jeder der beiden Impulskreise weist je einen Steuereingang a; d und zwei Ausgangspole b, c; e, f auf. Im Betrieb liefern die beiden Impulskreise 1, 2 zwischen ihren Ausgangspolen b, c bzw. e, f je eine Teilspannungsfolge $U_1$ bzw. $U_2$. Jeder der beiden Steuereingänge ist mit dem Zeitgeber 3 verbunden. Der Zeitgeber 3 dient der Synchronisierung der beiden Impulskreises 1; 2. Der positive (+) Ausgangspol b des ersten Impulskreises 1 und der negative (-)Ausgangspol f des zweiten Impulskreises 2 sind mit Anschlüssen 4 bzw. 5 verbunden. Die Anschlüsse 4 bzw. 5 sind ihrerseits über Zuleitungen 6, 7 mit dem Flachstrahler 8 verbunden. Die jeweiligen freien Ausgangspole c; e der beiden Impulskreise 1, 2 sind miteinander sowie mit Erdpotential verbunden, welches als Bezugspotential dient. Dadurch sind die beiden Impulskreise 1, 2 seriell geschaltet und es wird im Betrieb zwischen dem positiven (+) Ausgangspol b des ersten Impulskreises 1 und dem negativen (-) Ausgangspol f des zweiten Impulskreises 2 eine Differenzspannungsfolge $U_3$ erzeugt.

Der Flachstrahler 8 besteht aus einem Entladungsgefäß 9, streifenförmigen Kathoden 10 und dielektrisch behinderten, streifenförmigen Anoden 11. Das Entladungsgefäß 9 besteht aus einer Bodenplatte 12, einer Deckenplatte 13 und einem Rahmen 14, die allesamt eine rechteckige Grundfläche aufweisen. Bodenplatte 12 und Deckenplatte 13 sind mittels Glaslot mit dem Rahmen gasdicht verbunden derart, daß das Innere des Entladungsgefäßes 9 quaderförmig ausgebildet ist. Die Bodenplatte 12 ist größer als die Deckenplatte 13 derart, daß das Entladungsgefäß 9 einen umlaufenden freistehenden Rand aufweist. Die Kathoden 10 und Anoden 11 sind abwechselnd und parallel zueinander im gegenseitigen Abstand von ca. 6 mm auf der Innenwandung der Bodenplatte 12 angeordnet. Die Kathoden 10 und Anoden 11 sind an einander entgegengesetzten Enden verlängert und aus dem Innern des Entladungsgefäßes 9 auf der Bodenplatte 12 beidseitig nach außen geführt. Auf dem Rand der Bodenplatte 12 gehen die Kathoden 10 und Anoden 11 jeweils in kathodenseitige 15 bzw. anodenseitige 16 äußere Stromzuführungen über. Die äußeren Stromzuführungen 15, 16 sind jeweils mittels eines kurzen Verbindungsstücks 17,18 mit den Zuleitungen 6, 7 verbunden.

Der Durchbruch in der Deckenpiatte 13 dient lediglich darstellerischen Zwecken und gibt den Blick auf einen Teil der Anoden 11 und Kathoden 10 frei. Im Innern des Entladungsgefäßes 9 sind die Anoden 11 vollständig mit einer Glasschicht 19 bedeckt, deren Dikke ca. 250 μm beträgt. Die Elektroden 10;11 und Außenkontakte 15;16 sind als verschiedene Abschnitte einer kathodenseitigen und einer anodenseitigen Schichtstruktur aus Silber realisiert, die mittels Siebdrucktechnik und anschließendem Einbrennen gemeinsam aufgebracht sind. Die Schichtdicke beträgt ca. 6 μm.

In einer Variante (nicht dargestellt) ist zwischen dem negativen Anschluß 5 und der zugehörigen Zuleitungen 7 eine Offset-Gleichspannungsquelle geschaltet.

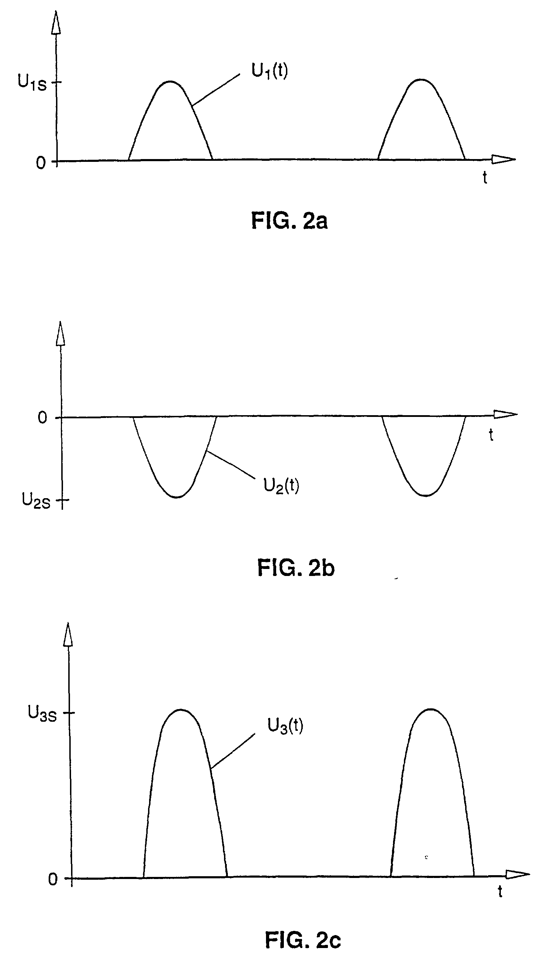

In den Figuren 2a bis 2c sind jeweils zeitliche Ausschnitte der beiden Teilspannungsfolgen $U_1(t)$ und $U_2(t) = - U_1(t)$ sowie der Differenzenfolge $U_3(t)$ aus Figur 1 schematisch und exemplarisch dargestellt. Gezeigt ist jeweils ein halbsinusförmiger Spannungspuls mit dem Spitzenwert $U_{1S}$, $U_{2S}$ bzw. $U_{3S}$, wobei gilt $|U_{3S}| = |U_{1S}| + |U_{2S}|$.

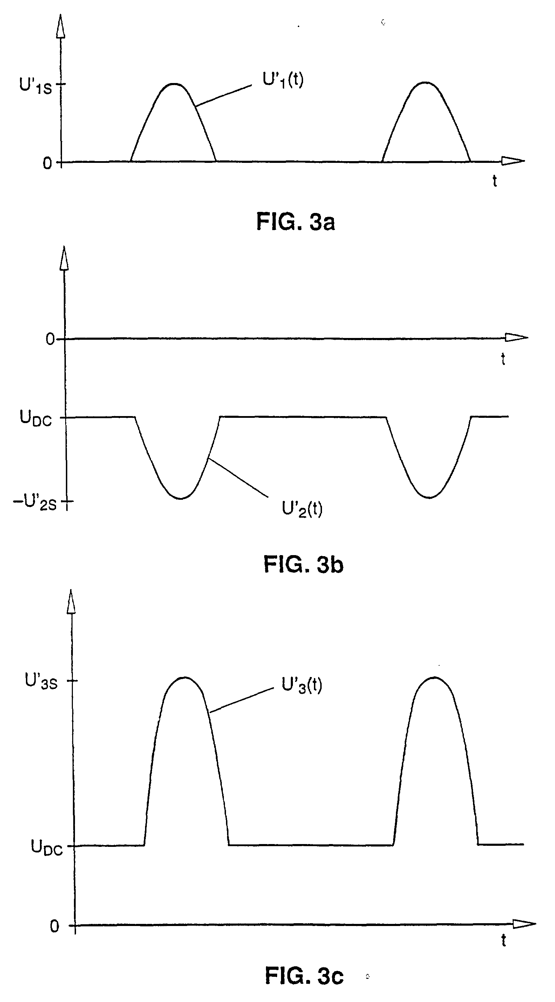

In den Figuren 3a und 3b sind zwei weitere Teilspannungsfolgen $U'_1(t)$ und $U'_2(t)$ idealisiert dargestellt. Im Unterschied zu Figur 2b ist dem Spannungssignal in Figur 3b eine Offset-Gleichspannung der Amplitude $U_{DC}$ additiv überlagert. Dadurch resultiert im Differenzsignal $U'_3(t)$ ebenfalls eine Offset-Gleichspannung der Amplitude $U_{DC}$, d.h.

$$|U'_{3S}| = |U'_{1S}| + |U'_{2S}| + |U_{DC}|.$$

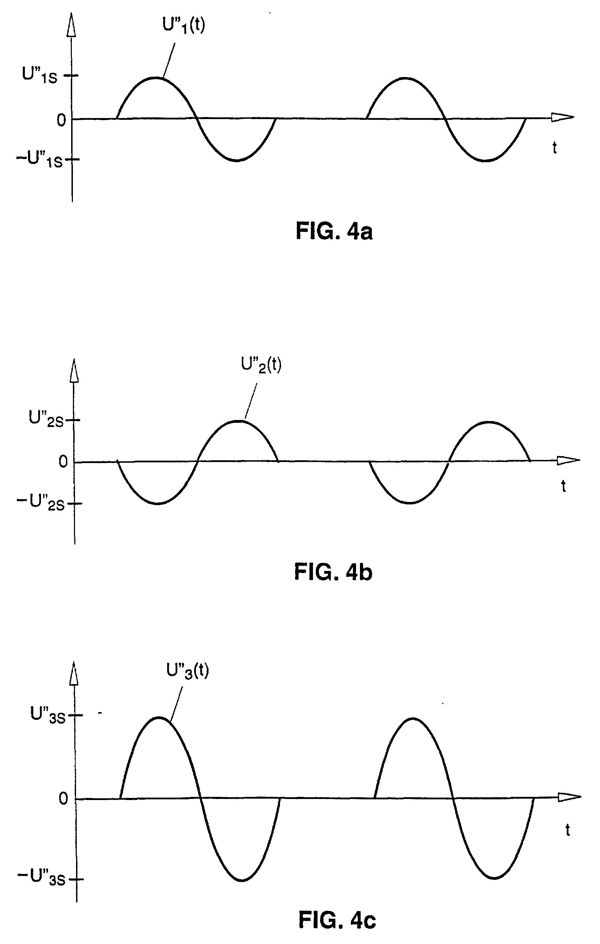

In den Figuren 4a und 4b sind zwei weitere Teilspannungsfolgen $U''_1(t)$ und $U''_2(t) = -U''_1(t)$ idealisiert dargestellt. Im Unterschied zu den Figuren 2a, 2b handelt es sich hier um Teilspannungsfolgen mit bipolaren Impulsen (sinusförmig). Die einzelnen bipolaren Impulse sind wie zuvor durch Pausen (hier: Spannung = Null) voneinander getrennt. Die resultierende Differenzenfolge $U''_3(t)$ enthält ebenfalls bipolare Impulse mit den beiden Spitzenwerten $|U''_{3S}| = |U''_{1S}| + |U''_{2S}|$ und $-U''_{3S}$, wobei $U''_{1S}$, $U''_{2S}$ die (positiven bzw. negativen) Spitzenwerte der beiden Teilspannungsfolgen bezeichnen.

In den vorstehenden idealisierten Darstellungen sind in der Praxis häufig auftretende Verzerrungen, wie Über- und Unterschwinger und dergleichen, nicht berücksichtigt.

An dieser Stelle sei nochmals darauf hingewiesen, daß in den Figuren 2a bis 4a und 2b bis 4b die Signalformen der Teilfolgen $U_1$ bis $U''_1$ bzw. $U_2$ bis $U''_2$ lediglich exemplarischen Charakter haben. Erfindungsgemäß sind insbesondere auch alle jene Signalformen geeignet und mittels der Schaltungsanordnung erzeugbar, die in der WO 94/23442 offenbart sind.

**Patentansprüche**

1. Verfahren zum Erzeugen von Impulsspannungsfolgen ($U_3(t)$; $U'_3(t)$; $U''_3(t)$) für den Betrieb von Entladungslampen (8) mittels gepulster, dielektrisch behinderter Entladung(en) mit

   - einem zumindest teilweise transparenten und mit einer Gasfüllung gefüllten geschlossenen oder von einem Gas oder Gasgemisch durchströmten offenen Entladungsgefäß (9) aus elektrisch nichtleitendem Material und

   - Elektroden einer ersten und einer zweiten Polarität (10 bzw. 11), wobei zumindest die Elektroden (11) einer Polarität vom Innern des Entladungsgefäßes durch dielektrisches Material (19) getrennt sind,

   **gekennzeichnet durch** folgende Verfahrensschritte,

   - Bereitstellen einer ersten Teilfolge ($U_1(t)$; $U'_1(t)$; $U''_1(t)$) von **durch** Pausen voneinander getrennten Spannungspulsen mit ersten Spitzenwerten ($U_{1S}$; $U'_{1S}$; $U''_{1S}$) und mit bezüglich eines Bezugspotentials positiven Anstiegsflanken, wobei das Bezugspotential (0) von den Elektroden entkoppelt ist,

   - Bereitstellen einer zweiten Teilfolge ($U_2(t)$; $U'_2(t)$; $U''_2(t)$) von **durch** Pausen voneinander getrennten Spannungspulsen mit zweiten Spitzenwerten ($U_{2S}$; $U'_{2S}$; $U''_{2S}$) und mit bezüglich des Bezugspotentials (0) negativen Anstiegsflanken,

   - Anlegen der ersten Teilfolge ($U_1(t)$; $U'_1(t)$; $U''_1(t)$) von Spannungspulsen an die Elektroden (11) der ersten Polarität (+),

   - Anlegen der zweiten Teilfolge ($U_2(t)$; $U'_2(t)$; $U''_2(t)$) von Spannungspulsen an die Elektroden (10) der zweiten Polarität (-),

   - Synchronisieren der beiden Teilfolgen ($U_1(t)$, $U_2(t)$ bzw. $U'_1(t)$, $U'_2(t)$ bzw. $U''_1(t)$, $U''_2(t)$) von Spannungspulsen miteinander derart, daß zwischen den Elektroden (10, 11) entgegengesetzter Polarität eine Differenzenfolge ($U_3(t)$; $U'_3(t)$; $U''_3(t)$) von Spannungspulsen erzeugt wird, wobei die Beträge der Spitzenwerte ($U_{3S}$; $U'_{3S}$; $U''_{3S}$) der Differenzenfolge ($U_3(t)$; $U'_3(t)$; $U''_3(t)$) größer sind als die Beträge der Spitzenwerte ($U_{1S}$, $U_{2S}$; $U'_{1S}$, $U'_{2S}$; $U''_{1S}$, $U''_{2S}$) jeder der beiden einzelnen Teilfolgen ($U_1(t)$, $U_2(t)$ bzw. $U'_1(t)$, $U'_2(t)$ bzw. $U''_1(t)$, $U''_2(t)$) von Spannungspulsen.

2. Verfahren nach Anspruch 1, **dadurch gekennzeichnet, daß** die zweite Teilfolge ($U_2(t)$; $U'2(t)$; $U''2(t)$) von Spannungspulsen durch die Invertierung der ersten Teilfolge ($U_1(t)$; $U'_1(t)$; $U''_1(t)$) von Spannungspulsen gebildet wird und daß die Synchronisierung derart erfolgt, daß die Beträge der Spitzenwerte ($|U_{3S}|$; $|U'_{3S}|$; $|U''_{3S}|$) der Differenzenfolge ($U3(t)$; $U'_3(t)$; $U''_3(t)$) die Summe der Beträge der Spitzenwerte ($|U_{1S}|$, $|U_{2S}|$; $|U'_{1S}|$, $|U'_{2S}|$; $|U''_{1S}|$, $|U''_{2S}|$) der beiden Teilfolgen ($U_1(t)$, $U_2(t)$ bzw. $U'_1(t)$, $U'_2(t)$ bzw. $U''_1(t)$, $U''_2(t)$) sind.

3. Verfahren nach einem der Ansprüche 1 oder 2, **dadurch gekennzeichnet, daß** als zusätzlicher Verfahrensschritt mindestens einer der beiden Teilfolgen ($U'_2(t)$) von Spannungspulsen und/oder der Differenzenfolge eine Offset-Gleichspannung ($U_{DC}$) überlagert wird, wobei die Gesamt-Offset-Gleichspannung gezielt höchstens so hoch gewählt wird, daß die Entladung(en) nach jedem Spannungspuls verlöschen kann (können) und daß ein unerwünschtes Wiederzünden zwischen den einzelnen Spannungspulsen verhindert wird.

4. Verfahren nach Anspruch 3, **gekennzeichnet durch** einen zusätzlichen Verfahrensschritt, in dem jeweils während der Pausen die Offset-Gleichspannung auf das gemeinsame Bezugspotential getastet wird.

5. Schaltungsanordnung zum Erzeugen von Impulsspannungsfolgen gemäß dem Verfahren nach einem der Ansprüche 1 bis 4 für den Betrieb von Entladungslampen (8) mittels gepulster, dielektrisch behinderter Entladung mit

- einem ersten Impulskreis (1) mit zwei Ausgangspolen (b, c) und einem Steuereingang (a), welcher Impulskreis (1) geeignet ist, eine erste Folge ($U_1$) von durch Pausen voneinander getrennten Spannungspulsen zu liefern,

- einem zweiten Impulskreis (2) mit zwei Ausgangspolen (e, f) und einem Steuereingang (d), welcher Impulskreis (2) geeignet ist, eine zweite Folge ($U_2$) von durch Pausen voneinander getrennten Spannungspulsen zu liefern, wobei einer der beiden Ausgangspole (c) des ersten Impulskreises (1) mit dem Ausgangspol (e) entgegengesetzter Polarität des zweiten Impulskreises (2) verbunden ist, wodurch zwischen den freien Ausgangspolen (b, f) der beiden Impulskreise (1, 2) eine Differenzenfolge ($U_3$) von Spannungspulsen abgreifbar ist, welche der Differenz der beiden auf das Bezugspotential bezogenen einzelnen Folgen ($U_1$, $U_2$) von Spannungspulsen entspricht,

- einem Zeitgeberkreis (3), der mit den Steuereingängen (a, d) der beiden Impulskreise (1, 2) verbunden ist und diese ansteuert derart, daß die beiden Impulsspannungsfolgen ($U_1$, $U_2$) miteinander synchronisiert sind in der Weise, daß die Spitzenwerte der Differenzenfolge ($U_3$) größer sind als die Spitzenwerte der beiden einzelnen Impulsspannungsfolgen ($U_1$, $U_2$).

6. Schaltungsanordnung nach Anspruch 5, **dadurch gekennzeichnet, daß** die Verbindung der Ausgangspole (c, e) entgegengesetzter Polarität zwischen den beiden Impulskreisen (1, 2) mit einem Bezugspotential aus der Schaltungsanordnung verbunden ist.

7. Schaltungsanordnung nach Anspruch 6, **dadurch gekennzeichnet, daß** das Bezugspotential auf dem Erdpotential liegt.

8. Schaltungsanordnung nach einem der Ansprüche 5 bis 7, **dadurch gekennzeichnet, daß** der zweite Impulskreis einen Inverterkreis umfaßt, welcher die zweite Folge von Spannungspulsen gegenüber der ersten Folge invertiert.

9. Schaltungsanordnung nach einem der Ansprüche 5 bis 8, **gekennzeichnet durch** einen zusätzlichen Gleichspannungskreis, dessen einer Pol mit dem freien Ausgangspol entgegengesetzter Polarität des Impulskreises verbunden ist.

10. Beleuchtungssystem mit

- einer Entladungslampe (8), die für eine dielektrisch behinderte Entladung geeignet ist, wobei die Entladungslampe (8) folgendes umfaßt:

  - ein zumindest teilweise transparentes und mit einer Gasfüllung gefülltes geschlossenes oder von einem Gas oder Gasgemisch durchströmtes offenes Entladungsgefäß (8) aus elektrisch nichtleitendem Material und

  - Elektroden (10, 11), wobei zumindest die Elektroden (11) einer Polarität vom Innern des Entladungsgefäßes (9) durch dielektrisches Material (19) getrennt sind,

- einer mit den Elektroden (10, 11) verbundenen Impulsspannungsquelle (1-3), die geeignet ist, durch Pausen voneinander getrennte Spannungspulse zu liefern,

**dadurch gekennzeichnet, daß** die Impulsspannungsquelle (1-3) eine Schaltungsanordnung gemäß einem oder mehreren der Ansprüche 5 bis 9 aufweist.

**Claims**

1. Method for producing pulsed-voltage sequences ($U_3(t)$; $U'_3(t)$ ; $U''_3(t)$) for the operation of discharge lamps (8) by means of (a) pulsed dielectric-barrier discharge(s), having

- an at least partially transparent discharge vessel (9), which is closed and filled with a gas filling or is open and has a gas or a gas mixture flowing through it and is composed of electrically non-conductive material, and

- electrodes of a first polarity (10) and of a second polarity (11), at least the electrodes (11) of one polarity being isolated from the interior of the discharge vessel by dielectric material (19),

**characterized by** the following method steps,

- provision of a first partial sequence ($U_1(t)$; $U'_1(t)$; $U''_1(t)$) of voltage pulses which are separated from one another by pauses, have first peak values ($U_{1S}$; $U'_{1S}$; $U''_{1S}$) and have rising flanks which are positive with respect to a reference-earth potential, the reference-earth potential (0) being decoupled from the electrodes,

- provision of a second partial sequence ($U_2(t)$; $U'_2(t)$; $U''_2(t)$) of voltage pulses which are separated from one another by pauses, have second peak values ($U_{2S}$; $U'_{2S}$; $U''_{2S}$) and have rising flanks which are negative with respect to the reference-earth potential (0),

- application of the first partial sequence ($U_1(t)$; $U'_1(t)$; $U''_1(t)$) of voltage pulses to the electrodes (11) of the first polarity (+),

- application of the second partial sequence ($U_2(t)$; $U'_2(t)$; $U''_2(t)$) of voltage pulses to the electrodes (10) of the second polarity (-),

- synchronization of the two partial sequences ($U_1(t)$, $U_2(t)$ and $U'_1(t)$, $U'_2(t)$ and $U''_1(t)$, $U''_2(t)$) of voltage pulses to one another in such a manner that a difference sequence ($U_3(t)$; $U'_3(t)$; $U''_3(t)$) of voltage pulses is produced between the electrodes (10, 11) of opposite polarity, the magnitudes of the peak values ($U_{3S}$; $U'_{3S}$; $U''_{3S}$) of the difference sequence ($U_3(t)$; $U'_3(t)$; $U''_3(t)$) being greater than the magnitudes of the peak values ($U_{1S}$, $U_{2S}$; $U'_{1S}$, $U'_{2S}$; $U''_{1S}$, $U''_{2S}$) of each of the two individual partial sequences ($U_1(t)$, $U_2(t)$ and $U'_1(t)$, $U'_2(t)$ and $U''_1(t)$, $U''_2(t)$) of voltage pulses.

2. Method according to Claim 1, **characterized in that** the second partial sequence ($U_2(t)$; $U'_2(t)$; $U''_2(t)$) of voltage pulses is formed by inversion of the first partial sequence ($U_1(t)$; $U'_1(t)$; $U''_1(t)$) of voltage pulses, and **in that** the synchronization is carried out in such a manner that the magnitudes of the peak values ($|U_{3S}|$; $|U'_{3S}|$; $|U''_{3S}|$) of the difference sequence ($U_3(t)$; $U'_3(t)$; $U''_3(t)$) are the sum of the magnitudes of the peak values ($|U_{1S}|$, $|U_{2S}|$; $|U'_{1S}|$, $|U'_{2S}|$; $|U''_{1S}|$, $|U''_{2S}|$) of the two partial sequences ($U_1(t)$, $U_2(t)$ and $U'_1(t)$, $U'_2(t)$ and $U''_1(t)$, $U''_2(t)$).

3. Method according to one of Claims 1 or 2, **characterized in that**, as an additional method step, at least one of the two partial sequences ($U'_2(t)$) of voltage pulses and/or the difference sequence have/has an offset DC voltage ($U_{DC}$) superimposed on them/it, the total offset DC voltage being deliberately chosen to be at most so great that the discharge(s) can be extinguished after each voltage pulse and **in that** undesirable restriking between the individual voltage pulses is avoided.

4. Method according to Claim 3, **characterized by** an additional method step in which, during each of the pauses, the offset DC voltage is pulsed at the common reference-earth potential.

5. Circuit arrangement for producing pulsed-voltage sequences in accordance with the method according to one of Claims 1 to 4 for the operation of discharge lamps (8) by means of a pulsed dielectric-barrier discharge, having

- a first pulse circuit (1) having two output poles (b, c) and a control input (a), which pulse circuit (1) is suitable for supplying a first sequence ($U_1$) of voltage pulses which are separated from one another by pauses,

- a second pulse circuit (2) having two output poles (e, f) and a control input (d), which pulse circuit (2) is suitable for supplying a second sequence ($U_2$) of voltage pulses which are separated from one another by pauses, one of the two output poles (c) of the first pulse circuit (1) being connected to the output pole (e) of opposite polarity of the second pulse circuit (2), as a result of which a difference sequence ($U_3$) of voltage pulses can be tapped off between the free output poles (b, f) of the two pulse circuits (1, 2), which difference sequence ($U_3$) corresponds to the difference between the two individual sequences ($U_1$, $U_2$) of voltage pulses with respect to the reference-earth potential,

- a timer circuit (3) which is connected to the control inputs (a, d) of the two pulse circuits (1, 2) and drives the latter in such a manner that the two pulsed-voltage sequences ($U_1$, $U_2$) are synchronized to one another, such that the peak values of the difference sequence ($U_3$) are greater than the peak values of the two individual pulsed-voltage sequences ($U_1$, $U_2$).

6. Circuit arrangement according to Claim 5, **characterized in that** the connection of the output poles (c, e) of opposite polarity between the two pulse circuits (1, 2) is connected to a reference-earth potential from the circuit arrangement.

7. Circuit arrangement according to Claim 6, **characterized in that** the reference-earth potential is the earth potential.

8. Circuit arrangement according to one of Claims 5 to 7, **characterized in that** the second pulse circuit comprises an invertor circuit, which inverts the second sequence of voltage pulses with respect to the first sequence.

9. Circuit arrangement according to one of Claims 5 to 8, **characterized by** an additional DC circuit, one pole of which is connected to the free output pole of opposite polarity of the pulse circuit.

10. Lighting system having

- a discharge lamp (8), which is suitable for a dielectric-barrier discharge, the discharge lamp (8) comprising the following:

  - an at least partially transparent discharge vessel (8), which is closed and filled with a gas filling or is open and has a gas or a gas mixture flowing through it and is composed of electrically non-conductive material, and

  - electrodes (10, 11), at least the electrodes (11) of one polarity being isolated from the interior of the discharge vessel (9) by dielectric material (19),

- a pulsed-voltage source (1-3) which is connected to the electrodes (10, 11) and is suitable for supplying voltage pulses which are separated from one another by pauses,

**characterized in that** the pulsed-voltage source (1-3) has a circuit arrangement according to one or more of Claims 5 to 9.

## Revendications

1. Procédé de production de trains ($U_3(t)$ ; $U'_3(t)$ ; - $U''_3(t)$) d'impulsions de tension pour faire fonctionner des lampes (8) à décharge au moyen de décharge(s) pulsée(s) à barrière diélectrique, comprenant

   - une enceinte (9) de décharge, au moins partiellement transparente, et fermée en étant emplie d'une atmosphère gazeuse ou ouverte en étant parcourue par un gaz ou par un mélange gazeux, l'enceinte étant en un matériau non conducteur de l'électricité, et
   - des électrodes d'une première et d'une deuxième polarités (10 et 11), au moins des électrodes (11) d'une polarité étant séparées de l'intérieur de l'enceinte de décharge par du matériau (9) diélectrique,

   **caractérisé par** les stades suivants du procédé

   - mise à disposition d'un premier sous-train ($U_1(t)$ ; $U'_1(t)$ ; $U''_1(t)$) d'impulsions de tension séparées les unes des autres par des intervalles et ayant des premières valeurs de crête ($U_{1S}$ ; $U'_{1S}$ ; $U''_{1S}$) et des fronts de montée positifs par rapport à un potentiel de référence, le potentiel (o) de référence étant découplé des électrodes,
   - mise à disposition d'un deuxième sous-train ($U_2(t)$ ; $U'_2(t)$ ; $U''_2(t)$) d'impulsions de tension séparées les unes des autres par des intervalles et ayant des secondes valeurs ($U_{2S}$ ; $U'_{2S}$ ;

$U''_{2S}$) de crête et des fronts de montée négatifs par rapport au potentiel (o) de référence,
   - application du premier sous-train ($U_1(t)$ ; $U'_1(t)$ ; $U''_1(t)$) d'impulsions de tension aux électrodes (11) de la première polarité (+),
   - application du deuxième sous-train ($U_2(t)$ ; $U'_2(t)$ ; $U''_2(t)$) d'impulsions de tension à l'électrode (10) de la deuxième polarité (-),
   - synchronisation des deux sous-trains ($U_1(t)$, $U_2(t)$ et $U'_1(t)$, $U'_2(t)$ et $U''_1(t)$, $U''_2(t)$) d'impulsions de tension l'un avec l'autre, de façon à produire entre les électrodes (10, 11) de polarité opposée un train ($U_3(t)$ ; $U'_3(t)$ ; $U''_3(t)$) différentiel d'impulsion de tension, les valeurs absolues des valeurs de crête ($U_{3S}$ ; $U'_{3S}$ ; $U''_{3S}$) du train ($U_3(t)$ ; $U'_3(t)$ ; $U''_3(t)$) différentiel étant plus grandes que les valeurs absolues des valeurs de crête ($U_{1S}$, $U_{2S}$ ; $U'_{1S}$, $U'_{2S}$ ; $U''_{1S}$, $U''_{2S}$) de chacun des deux sous-trains ($U_1(t)$, $U_2(t)$ et $U'_1(t)$, $U'_2(t)$ et $U''_1(t)$, $U''_2(t)$) d'impulsions de tension.

2. Procédé suivant la revendication 1, **caractérisé en ce qu'**il consiste à former le deuxième sous-train ($U_2(t)$ ; $U'_2(t)$ ; $U''_2(t)$) d'impulsions de tension par l'inversion du premier sous-train ($U_1(t)$ ; $U'_1(t)$ ; $U''_1(t)$) d'impulsions de tension et à effectuer la synchronisation de façon que les valeurs absolues des valeurs de crête ($|U_{3S}|$ ;$|U'_{3S}|$ ;$|U''_{3S}|$) du train ($U_3(t)$ ; $U'_3(t)$ ; $U''_3(t)$) différentiel représentent la somme des valeurs absolues des valeurs de crête ($|U_{1S}|$, $|U_{2S}|$ ;$|U'_{1S}|$, ($|U'_{2S}|$ ;$|U''_{1S}|$ ;$|U''_{2S}|$) des deux sous-trains ($U_1(t)$, $U_2(t)$ et $U'_1(t)$, $U'_2(t)$ et $U''_1(t)$, $U''_2(t)$).

3. Procédé suivant l'une des revendications 1 ou 2, **caractérisé en ce qu'**il consiste à superposer, en tant que stade de procédé supplémentaire, à au moins l'un des deux sous-trains ($U'_2(t)$) d'impulsions de tension et/ou du train différentiel, une tension ($U_{DC}$) continue d'offset, toute la tension continue d'offset étant choisie délibérément au plus si haute que la (les) décharge(s) peut (peuvent) s'éteindre après chaque impulsion de tension et que tout réallumage peu souhaitable entre les impulsions de tension individuelles est empêché.

4. Procédé suivant la revendication 3, **caractérisé par** un stade de procédé supplémentaire dans lequel, pendant les intervalles, la tension continue d'offset est mise au potentiel de référence commun.

5. Circuit de production de train d'impulsions de tension selon le procédé suivant l'une des revendications 1 à 4 pour faire fonctionner des lampes (8) à décharge au moyen d'une décharge pulsée à barrière diélectrique comprenant

- un premier circuit (1) d'impulsions ayant deux pôles (b, c) de sortie et une entrée (a) de commande, ce circuit (1) d'impulsions étant apte à fournir un premier train ($U_1$) d'impulsions de tension séparées les unes des autres par dès intervalles,
- un deuxième circuit (2) d'impulsions ayant deux pôles (e, f) de sortie et une entrée (d) de commande et ce circuit (2) d'impulsions étant apte à fournir un deuxième train ($U_2$) d'impulsions de tension séparées les unes des autres par des intervalles, l'un des deux pôles (c) de sortie du premier circuit (1) d'impulsions étant relié au pôle (e) de sortie de polarité opposé du deuxième circuit (2) d'impulsions, grâce à quoi on peut prélever entre les pôles (b, f) libres de sortie des deux circuits (1, 2) d'impulsions un train ($U_3$) différentiel d'impulsions de tension, qui correspond à la différence des deux trains ($U_1$, $U_2$) d'impulsions de tension rapportés au potentiel de référence,
- un circuit (3) d'horloge qui est relié aux entrées (a, d) de commande des deux circuits (1, 2) d'impulsion et qui les commande de façon que les deux trains ($U_1$, $U_2$) d'impulsions de tension soient synchronisés l'un avec l'autre, de sorte que les valeurs de crête du train ($U_3$) différentiel soient plus grandes que les valeurs de crête des deux trains ($U_1$, $U_2$) individuels d'impulsions de tension.

6. Circuit suivant la revendication 5, **caractérisé en ce que** la liaison du pôle (c, e) de sortie de polarité opposée est reliée entre les deux circuits (1, 2) d'impulsions à un potentiel de référence du circuit.

7. Circuit suivant la revendication 6, **caractérisé en ce que** le potentiel de référence est au potentiel de la terre.

8. Circuit suivant l'une des revendications 5 à 7, **caractérisé en ce que** le deuxième circuit d'impulsions comporte un circuit inverseur qui inverse le deuxième train d'impulsions de tension par rapport au premier train.

9. Circuit suivant l'une des revendications 5 à 8, **caractérisé par** un circuit de tension continue supplémentaire, dont l'un des pôles est relié au pôle de sortie libre de polarité opposé du circuit d'impulsions.

10. Système d'éclairage comprenant

- une lampe (8) de décharge qui convient pour une décharge à barrière diélectrique, la lampe (8) de décharge comprenant ce qui suit :

- une enceinte (8) de décharge, au moins partiellement transparente et fermée en étant emplie d'une atmosphère gazeuse ou ouverte en étant traversée par un gaz ou un mélange gazeux, l'enceinte étant en matériau non conducteur de l'électricité, et
- des électrodes (10, 11) au moins les électrodes (11) d'une polarité étant séparées de l'intérieur de l'enceinte (9) de décharge par du matériau (19) diélectrique,

- une source (1 à 3) d'impulsions de tension, qui est reliée aux électrodes (10, 11) et qui est apte à fournir des impulsions de tension séparées les unes des autres par des intervalles,

   **caractérisé en ce que** la source (1 à 3) d'impulsions de tension comporte un circuit suivant l'une ou plusieurs des revendications 5 à 9.

FIG.1

**FIG. 2a**

**FIG. 2b**

**FIG. 2c**

FIG. 3a

FIG. 3b

FIG. 3c

**FIG. 4a**

**FIG. 4b**

**FIG. 4c**